# EUROPÄISCHE PATENTSCHRIFT

(11) **EP 2 117 340 B1**
(45) Veröffentlichungstag und Bekanntmachung des Hinweises auf die Patenterteilung: **25.01.2012**
(21) Anmeldenummer: 08707623.8
(22) Anmeldetag: 08.02.2008
(51) Int. Cl.: A23K 1/06, A23L 3/50, C12F 3/06, F26B 1/00, F26B 3/08

(54) **VERFAHREN ZUM TROCKNEN VON NEBENPRODUKTEN**
METHOD FOR DRYING BYPRODUCTS
PROCÉDÉ DE SÉCHAGE DE SOUS-PRODUITS

(30) Priorität: 09.02.2007 EP 07002862
(43) Veröffentlichungstag der Anmeldung: 18.11.2009
(73) Patentinhaber: BMA Braunschweigische Maschinenbauanstalt AG, 38122 Braunschweig (DE)
(72) Erfinder: CASPERS, Gerald, 38527 Maine (DE); KLEIN, Christian, 38300 Wolfenbüttel (DE); KRELL, Lothar, 38173 Erkerode (DE)
(74) Vertreter: Weber-Bruls, Dorothée
(86) Internationale Anmeldenummer: PCT/EP2008/000978
(87) Internationale Veröffentlichungsnummer: WO 2008/095722

(56) Entgegenhaltungen:
- EP-A- 1 123 910
- EP-A- 1 142 487
- EP-B1- 0 093 720
- DD-A1- 241 546
- DE-A1- 2 506 795
- US-A- 821 326
- US-A- 3 700 461
- US-A- 3 925 904
- US-A- 5 611 935
- US-A- 5 958 233
- US-A1- 2006 057 251
- DATABASE WPI Week 199711 Thomson Scientific, London, GB; AN 1997-109644 XP002445169 & CN 1 078 866 A (AQUATIC TECHNOLOGY DEV CO CHINA AQUATIC) 1. Dezember 1993 (1993-12-01)

## Beschreibung

Die Erfindung betrifft ein Verfahren zum Trocknen von Nebenprodukten, die bei der Verarbeitung von stärke- und zuckerhaltigen Rohstoffen anfallen, insbesondere nach einer Fermentation und Destillation nach dem Oberbegriff von Anspruch 1.

Bei der Verarbeitung stärke- und zuckerhaltiger Rohstoffe, beispielsweise bei der Herstellung von Alkohol oder Bier, werden die Rohstoffe vorzugsweise gemahlen und unter Zugabe von Wasser und Hefe fermentiert. Der dabei entstehende Alkohol wird entnommen und die übrig bleibenden Nebenprodukte werden einer Verwendung zugeführt. Ein typisches Nebenprodukt ist die sogenannte Schlempe, die bis auf die Kohlenhydrate die Stoffe enthält, die der Maische zugeführt werden, beispielsweise Eiweiße, Fette und Mineralstoffe sowie übrige Bestandteile des Getreides. Die Schlempe fällt mit einem relativ hohen Flüssigkeitsanteil an, so dass sie flüssig als Dünger oder getrocknet als Futtermaterial verwendet werden kann. Die getrocknete Schlempe von Getreidemaischen wird auch DDGS (Distillers Dried Grains with Solubles) genannt. Zur Herstellung dieser DDGS sind verschiedene Verfahren vorgeschlagen worden, die aufgrund der mechanischen oder thermischen Belastungen die Inhaltsstoffe zerstören und das hochwertige Futtermittel nachteilig verändern. Ebenfalls sind die vorgeschlagenen Trocknungsverfahren mitunter aufwendig, so wird beispielsweise das Gefriertrocknen vorgeschlagen, was unter Einsatz hoher Energiemengen stattfinden muss.

Ein Verfahren zur Herstellung von Viehfutter aus Schlempen ist in der WO 83/00007 A1 beschrieben, bei dem der Flüssigkeitsstrom aus einem Fermentierer über eine Zentrifuge in einen hefereichen und einen im Wesentlichen hefefreien Produktstrom getrennt wird. Vor der Separation wird das feste Material über eine Siebeinrichtung abgetrennt und einem Abscheider zugeführt. Der Abscheider wird über indirekte Dampfzufuhr beheizt. Von dem Abscheider wird kontinuierlich die Schlempe abgeführt und einer Granulationstrommel zugeführt. Dieser Trommel werden ebenfalls getrocknete Partikel zugeführt, die nach einer Trocknungsanlage rückgeführt werden. Durch die Granulationstrommel wird ein Luftstrom hindurch geführt.

Die DE 102 49 027 A1 beschreibt eine Anlage zur Herstellung von Alkohol, bei der die Schlempe über einen Dekanter in einen Dünnsaft und einen sogenannten "Wet-Cake" fraktioniert wird. Der Dünnsaft wird zu einem Dicksaft oder Sirup eingedickt und mit dem Wet-Cake vermischt. Schalenteile werden dem Gemisch zugeführt und zur Endtrocknung an eine Trockenstation gegeben. Der Trockner kann als Heißdampftrockner ausgebildet sein.

Eine ähnliche Anlage und ein ähnliches Verfahren beschreibt die US 3,925,904, bei der bzw. dem nach einer mechanischen Entwässerung über Pressen oder Zentrifugen eine flüssige Phase eingedampft und dem "Wet-Cake" wieder zugeführt wird. Mit einem relativ hohen Feuchtigkeitsgehalt von über 60 % wird diese Mischung oder Dispersion einem "Flash-Drying"-Prozess zugeführt. Statt einer Presse oder Zentrifuge wird ein ähnliches Verfahren mit einem Dekanter in der US 5,958,233 beschrieben.

Aus der US 821,326 ist ein gattungsgemäßes Verfahren zum Herstellen von Trockenfutter aus einer Destillationsschlempe bekannt, bei dem die Schlempe in eine Flüssigphase und eine Festphase getrennt wird, die Festphase granuliert und absorbierend gemacht wird, aus der Flüssigphase ein Sirup gewonnen wird, die granulierte Festphase mit dem Sirup getränkt und sodann getrocknet wird, bspw. in einem Rotationstrocknungsverfahren.

In der US 2006/0057251 A1 ist die Herstellung einer Tierfutterzusammensetzung beschrieben, bei der u. a. eine Trennung einer Schlempe, die nach einer Alkoholfermentation zurückbleibt, in unlösliche und lösliche Bestandteile, eine Konzentration der löslichen Bestandteile in einen Sirup und eine Wiedergewinnung und Vermischung der unlöslichen Bestandteile und des Sirups sowie eine Trocknung stattfinden. Dabei können unterschiedliche Trockner zum Einsatz kommen.

Die US 5,611,935 offenbart eine Anlage zur Behandlung von Schlamm, die einen Wirbelschichttrockner und einen Wirbelschichtkühler umfasst. Dem Wirbelschichttrockner ist ein Mischer vorgeschaltet, in welchem ein zugeführter, zuvor mechanisch vorentwässerter Dickschlamm mit Trockenschlamm gemischt wird, da die Trocknung einen Trockensubstanzgehalt von ca. 50 bis 80 Massenprozent vorraussetzt.

Ein Wirbelschichtverdampfungstrockner an sich ist bspw. in der EP 1 044 044 A1 beschrieben.

Ausgehend von diesem Stand der Technik liegt der Erfindung die Aufgabe zugrunde, das gattungsgemäße Verfahren derart weiterzuentwickeln, dass die Nachteile des Stands der Technik überwunden werden. Dabei soll ein schonendes Trocknen und Verarbeiten des Nebenproduktes zu einem staubarmen, rieselfähigen und mechanisch stabilen Produkt ermöglicht werden. Erfindungsgemäß wird diese Aufgabe durch ein Verfahren mit den Merkmalen des Anspruchs 1 gelöst. Vorteilhafte Ausgestaltungen und Weiterbildungen der Erfindung sind in den Unteransprüchen 2-10 angegeben.

Das erfindungsgemäße Verfahren zum Trocknen von Nebenprodukten, die bei der Verarbeitung von stärke- und zuckerhaltigen Rohstoffen anfallen, insbesondere nach Fermentation und Destillation, bei dem das Nebenprodukt in eine Klärephase mit hohem Flüssigkeitsanteil und in eine Dickphase fraktioniert wird, sieht vor, dass die abgetrennte Dickphase in einem Konditionierungsverfahren zu Partikeln geformt wird und diese Partikel in einer Wirbelschichttrocknungsanlage bei einem relativen Lückenvolumen im Bereich zwischen 0,5 und 0,92 getrocknet werden. Es wurde überraschend gefunden, dass sich konditionierte und dabei zu im Wesentlichen uniformen, fluidisierungsfähigen, formstabilen Partikeln geformte Schlempe in einem pneumatischen Wirbelschichtverfahren mit einem relativ hohen relativen Lückenvolumen in der Wirbelschicht effektiv und ohne zu zerfallen trocknen lässt, so dass sich ein problemlos weiterverarbeitbares Produkt in guter Qualität erhalten lässt. Die Partikel können in der Wirbelschichttrocknungsanlage schonend und mit einem hohen Wirkungsgrad getrocknet werden, so dass als Endprodukt ein Schüttgut vorliegt, das im Wesentlichen staubfrei ist und in seinem Feuchtegehalt an die Anforderungen der Abnehmer des getrockneten Nebenproduktes angepasst werden kann.

Das Verfahrens sieht zudem vor, dass die Klärephase zu einem Sirup eingedampft und der Sirup der Dickphase zugeführt wird, so dass eine Mischphase entsteht. Die so gebildete Mischphase, die durch die Inhaltsstoffe der Klärephase angereichert wurde, wird dann wie die Dickphase konditioniert und getrocknet bzw. weiterverarbeitet. Bei der Mischphase handelt es sich um eine modifizierte Dickphase, der neben dem Sirup auch andere Stoffe zugegeben werden können. Die Ausführungen zu der Dickphase gelten ebenso für die Mischphase und umgekehrt.

Der Dick- und Mischphase können Zuschlagstoffe zugeführt werden, um die Eigenschaften des Endproduktes oder auch der Dick- und Mischphase zu beeinflussen. Um den Feuchtegehalt der Dick- und Mischphase einstellen zu können, kann ein Zuschlagstoff mit einem Feuchtegehalt zugegeben werden, der geringer als der Feuchtegehalt der Dickphase ist. Eventuell muss Flüssigkeit zugeführt werden, wenn die Dick- und Mischphase für die Konditionierung in der entsprechenden Vorrichtung nicht die erforderliche Konsistenz besitzt. Soll das Endprodukt bestimmte Nährstoffe enthalten, die in dem Nebenprodukt nicht oder nicht in ausreichendem Maße vorhanden sind, können diese ebenfalls zugegeben werden.

Zur möglichst energiesparenden Fraktionierung des Ausgangsnebenproduktes ist eine Gravitationsfraktionierung vorgesehen, in der das Nebenprodukt, beispielsweise in Gestalt einer Schlempe, einem ein- oder mehrfachen Gravitationsfeld zugeführt wird, so dass eine Trennung in eine Dickphase und eine Klärephase erfolgt. Ein einfaches Gravitationsfeld wird beispielsweise über ein Bogensieb bereitgestellt, während ein Dekanter oder eine Zentrifuge ein mehrfaches Gravitationsfeld bereitstellen und die Dickphase mit einem höheren Feststoffanteil liefern.

Die Trocknung in der Wirbelschichttrocknungsanlage kann auch eine Erwärmung der Partikel zur Folge haben, so dass nachfolgend eine Kühlung der getrockneten Partikel bzw. des Trockenproduktes erfolgen muss. Dieses Kühlen erfolgt bevorzugt in einer Wirbelschichtapparatur, die sowohl eine effektive Kühlung als auch einen schonenden Transport der getrockneten Partikel ermöglicht.

Bevorzugt wird der Trockensubstanzgehalt der Dick- oder Mischphase vor der Konditionierung in einen Bereich zwischen 30 % und 60 % eingestellt, vorzugsweise auf einen Bereich von ungefähr 40 %, bevor die Dick- oder Mischphase in einem Formgebungsverfahren konditioniert wird. Es wurde überraschend gefunden, dass die Dick- oder Mischphase bei diesem vergleichsweise niedrigen Trockensubstanzgehalt durch den Konditionierungsvorgang in eine ausreichend mechanisch stabile Form gebracht werden kann, mit der ein nachfolgendes Fluidisieren und Trocknen zu einem gleichförmigen, körnigen Produkt in der Wirbelschichttrocknungsanlage durchgeführt werden kann.

Die Konditionierung der Dick- oder Mischphase kann in einem Expander, Extruder oder einem Pelletierer erfolgen, gegebenenfalls können diese Anlagen auch miteinander kombiniert werden. Solche Konditioniervorrichtungen werden üblicherweise nur für die Verarbeitung von Produkten mit einem höheren Trockensubstanzgehalt eingesetzt, so dass es für einen Fachmann überraschend war, auch relativ geringe Trockensubstanzgehalte der Dick- und Mischphase durch diese Konditioniervorrichtungen in Partikel zu formen, nämlich vorzugsweise in an eine Kugelform angenäherte Pellets. Diese Pellets haben eine Zylinderform, bei der der Zylinderdurchmesser im Wesentlichen der Länge entspricht und vorzugsweise in einem Bereich von 5 bis 10 mm liegt. Bei der Konditionierung der Dick- und Mischphase kann durch Einwirken von Druck und Temperatur die mechanische Festigkeit eingestellt werden, ebenso kann durch die Konditionierung eine chemisch-physikalische Veränderung bewirkt werden, die Einfluss auf das getrocknete Endprodukt haben kann.

Die Konditionierung erfolgt dabei in dem Maße, dass fluidisierbare Einzelpartikel vorliegen. Das getrocknete Endprodukt ist staubarm und weist eine sehr gute Rieselfähigkeit auf. Dadurch ist eine gute Handhabbarkeit des hergestellten Produktes bei allen logistischen Prozessen gegeben.

Als Trocknungsfluid kann in der Wirbelschichttrocknungsanlage überhitzter Wasserdampf eingesetzt werden, der vorzugsweise im Kreislauf geführt wird. Die Überhitzung des Trocknungsfluides kann außerhalb der Wirbelschicht durch Heizdampf erfolgen. Das aus den konditionierten Partikeln verdampfte Wasser kann als Trocknungsbrüden einer energetischen Nutzung durch Freisetzen der enthaltenen Kondensationsenthalpie in einer technologischen Stufe des Gesamtprozesses außerhalb der Wirbelschichttrocknungsanlage genutzt werden. Dadurch wird der energetische Aufwand bei der Verarbeitung von stärke- und zuckerhaltigen Rohstoffen erheblich gesenkt.

Innerhalb der Wirbelschichttrocknungsanlage können produktschonende Trocknungsbedingungen eingestellt werden, wobei in Verbindung mit einer nahezu sauerstoffarmen Wasserdampfatmosphäre nur geringe Produktverluste aufgrund der stark eingeschränkten Oxidation des Trocknungsgutes auftreten.

Das getrocknete Produkt weist wegen der praktisch nicht vorhandenen Verhornung der getrockneten Partikel eine gute Rehydratisierbarkeit auf. Nach Bedarf, z. B. zur Verfütterung an Tiere, können die getrockneten Partikel mit einem höheren Feuchtegehalt versehen werden. Die gute Rehydratisierbarkeit erlaubt eine gute Resorption der Nährstoffe, so dass das Endprodukt eine hohe physiologische Qualität aufweist.

Eine Weiterbildung sieht vor, dass ein Teil der getrockneten Partikel als Zuschlagstoff zu der Dickphase und dem Sirup zurückgeführt wird. Das Rückführen der bereits getrockneten Partikel ermöglicht die Einstellung der Dick- und Mischphase auf einen Trocknungsgrad bzw. einen Trockensubstanzgehalt, der eine im Wesentlichen formstabile Konditionierung der Dick- und Mischphase zu Partikeln ermöglicht. Die getrockneten Partikel können allein als Zuschlagstoff oder mit weiteren Zuschlagstoffen der Dick- und Mischphase zugegeben werden.

Das erfindungsgemäße Verfahren sieht auch vor, dass durch eine mechanische Trenneinrichtung eine Trennung in eine Klärephase mit einem hohen Flüssigkeitsanteil und eine Dickphase vorgenommen wird. Der Trenneinrichtung ist eine formgebende Konditioniereinrichtung nachgeschaltet, die die Dickphase oder eine Mischphase aus Klärephase und Dickphase und ggf. Zuschlagstoffen zu Partikeln formt, wobei der Konditioniereinrichtung eine Wirbelschichttrocknungsanlage nachgeordnet ist, in der die Partikel getrocknet werden. Die Wirbelschichttrocknungsanlage arbeitet bei einem relativen Lückenvolumen der Wirbelschicht zwischen 0,5 und 0,92 und fluidisiert die zu trocknenden Partikel, wodurch eine schonende Trocknung erreicht wird.

Ein Eindampfer für die Klärephase zur Herstellung eines Sirups ebenso wie eine Zuführeinrichtung für die eingedampfte Klärephase zur Dickphase, z.B. in eine Mischeinrichtung, können vorgesehen sein, wenn die Dickphase angereichert oder modifiziert werden soll oder muss.

Eine Kühleinrichtung, insbesondere eine Wirbelschichtapparatur ist der Trocknungsanlage nachgeordnet, um ein gekühltes, transportfähiges und rieselfähiges Produkt zu erhalten.

Die Trenneinrichtung zum Fraktionieren des Nebenproduktes, beispielsweise der Schlempe aus einem Destillationsprozess, kann als ein- oder mehrfaches Gravitationsfeld ausgebildet sein, ebenfalls können alternative Trenneinrichtungen oder Vorrichtungen vorgesehen sein, um eine Trennung in eine eher flüssige Klärephase und eine Dickphase vorzunehmen. Es können beispielsweise Dekanter oder Zentrifugen als Einrichtungen zur Erzeugung eines mehrfachen Gravitationsfeldes eingesetzt werden, ein Bogensieb ist ein Beispiel für ein einfaches Gravitationsfeld.

Als Konditioniereinrichtung für die Dick- und Mischphase können Expander, Extruder oder Pelletierer eingesetzt werden, ebenfalls können mehrere solcher Konditioniereinrichtungen in Kombination eingesetzt werden, um die gewünschte Partikelform bzw. Partikelgröße zu erhalten.

Eine Rückführeinrichtung transportiert in einer Weiterbildung der Erfindung einen Teilstrom der getrockneten Partikel zur Mischeinrichtung, so dass darüber der gewünschte Trockensubstanzgehalt in der Dick- und Mischphase vor der Zuführung zur Konditioniereinrichtung eingestellt werden kann. Die Mischeinrichtung für die Dickphase und die eingedampfte Klärephase kann vor der Konditionierungseinrichtung angeordnet sein, ebenfalls können die Zuschlagstoffe über eine Zuführeinrichtung unmittelbar der Konditionierungseinrichtung zugeführt werden.

Die Wirbelschichtrocknungsanlage kann als eine Vorrichtung zum Entfernen von Fluiden und/oder Feststoffen aus einem Gemenge partikelförmiger Materialien mit einem Behälter, der einen ringförmigen Prozessraum mit einer zylindrischen Außenkontur ausbildet, ausgebildet sein. Sie weist Einrichtungen zum Einbringen und Austragen des partikelförmigen Materials in den und aus dem Prozessraum und mit einer Lüftereinrichtung zum Zuführen eines Fluidisierungsmittels von unten in den Prozessraum sowie Einrichtungen zur Aufbereitung des Fluidisierungsmittels in Strömungsrichtung vor der Lüftereinrichtung auf, wobei in dem Prozessraum durch sich vertikal erstreckende Wände sich in Vertikalrichtung erstreckende Zellen ausgebildet sind, von denen eine eine nicht oder nur in verringerten Maße von unten von dem Fluidisierungsmittel durchströmte Austragszelle bildet, an deren unterem Ende die Austragseinrichtung angeordnet ist, und von denen eine andere Zelle mit der Eintragseinrichtung versehen ist und eine Eintragszelle bildet, und die Zellen an ihrem oberen Ende offen sind. Es ist vorgesehen, dass oberhalb der Wände Drallschaufeln angeordnet sind, die in Strömungsrichtung von der Eintragszelle zu der Austragszelle geneigt oder gekrümmt sind, deren Außendurchmesser nicht größer als der Außendurchmesser der Wände und damit des Prozessraumes ist, wobei die Drallschaufeln von einer Außenhülle umgeben sind, die nicht radial über die Außenhülle des Prozessraumes hinaus ragt. Das Fluidisierungsmittel strömt von unten durch den Prozessraum nach oben austretend zwischen den Drallschaufeln in den darüber befindlichen Übergangsbereich. Durch die Anordnung von Drallschaufeln oberhalb der vertikalen Wände ist es möglich, die Strömungsrichtung des Fluidisierungsmittels, insbesondere überhitzter Dampf, ebenso wie die Bewegungsrichtung des zu behandelnden Materials zu beeinflussen und zu unterstützen. Die Drallschaufeln sind so gekrümmt oder geneigt, dass in dem darüber angeordneten Freiraum, bevorzugt ohne strömungsbeeinflussende Einbauten, ein rotierender, homogener Fluidisierungsmittelstrom, als Drallströmung bezeichnet, erzeugt wird. Die Zentrifugalkräfte dieser Drallströmung bewegen die mitgeführten Partikel radial nach außen, wo sie teilweise wieder nach unten in den Bereich der Drallschaufeln bzw. wieder in den Prozessraum fallen. Dabei verhindert die Richtung der Drallströmung, dass feuchte Partikel aus der Eintragszelle direkt in die Austragszellen gelangen können.

Die aus den einzelnen Zellen durch den Drallschaufelbereich und anschließend in den Freiraum des Übergangsbereiches eintretenden Ströme des Fluidisierungsmittels besitzen bezüglich ihrer Mengenströme und Zustandsbedingungen unterschiedliche Werte, die in der Drallströmung homogenisiert werden. Eine konische Erweiterung für den Übergangsbereich und das Vorsehen ebenfalls sich konisch erweiternder Einbauten und Leitbleche ist nicht mehr erforderlich, so dass sich neben der Raumeinsparung aufgrund der zumindest gleich bleibenden äußeren Dimensionierung in Axialrichtung eine erhebliche Materialeinsparung bei dem Aufbau der Vorrichtung realisieren lässt.

Es ist möglich, den Bereich oberhalb der Drallschaufeln zylindrisch oder sich konisch nach oben verjüngend auszubilden, um eine möglichst kompakte Außenhülle und damit eine möglichst wenig Material verbrauchende Konstruktion bereitzustellen.

Die Zellen, die durch die vertikalen Wände ausgebildet sind, an deren oberen Ende sich die Drallschaufeln anschließen können, können sich radial bis zur Außenwandung erstrecken, so dass sie in Umfangsrichtung eine echte Unterteilung und Sperre darstellen. An dem unteren Ende der Wände können Durchgangsöffnungen vorhanden sein, damit sich das Material, insbesondere grobe partikelförmige Materialien, auch unterhalb der Wände in Umfangsrichtung weiter bewegen kann. Die Anzahl der Drallschaufeln ist im Wesentlichen unabhängig von der Anzahl der vertikalen Wände, die Anordnung der Drallschaufeln ist nicht auf die unmittelbare Zuordnung der Oberkante der Wände zu der Unterkante der Drallschaufeln beschränkt.

Die Drallschaufeln können an den Wänden befestigt oder zusammen damit ausgebildet sein, was eine kontinuierliche Führung sowohl der partikelförmigen Materialien als auch des Fluidisierungsmittels ermöglicht. Alternativ kann zwischen den Unterkanten Drallschaufeln und den Oberkanten der Wände ein vertikaler Abstand bestehen, der gegebenenfalls von der Eintragszelle bis vor die Austragszelle, nicht jedoch von der Austragszelle zur Eintragszelle einen freien Durchgang ermöglicht. Der Abstand dient zu einer Entkopplung der Wände von den Drallschaufeln und zur Reduzierung des Gesamtgewichtes der Vorrichtung.

Oberhalb des Freiraumes ist ein Staubabscheider integriert, an dessen Unterseite das Fluidisierungsmittel durch Zusatzdrallschaufeln einströmt. Die Zusatzdrallschaufeln besitzen eine zu den Drallschaufeln gleiche Orientierung und stärkere Neigung oder Krümmung, um eine im Wesentlichen kreisförmige Strömungsbewegung sowohl des Fluidisierungsmittels als auch der durch das Fluidisierungsmittel mitgerissenen Staubpartikel und partikelförmigen Materialien im Staubabscheider zu bewirken. Es findet also eine zweistufige Umlenkung der Strömung bzw. des Partikelstromes durch die Drallschaufeln und die Zusatzdrallschaufeln statt, wodurch im Staubabscheider ein Zentrifugalfeld erzeugt wird, in dem sich die mitgeführten Staubpartikel und partikelförmigen Materialien vorzugsweise außen bewegen und durch zumindest eine Öffnung in der Staubabscheiderwandung den Staubabscheider verlassen.

Eine Ausgestaltung sieht vor, dass die Druckseite der Drallschaufeln bezogen auf die axiale Strömungsgeschwindigkeitskomponente des Fluidisierungsmittels an der Unterkante in einem Winkel von bis zu 10° geneigt ist. Die Drallschaufeln können an ihrer Unterkante auch parallel zu der Axialkomponente der Strömung des Fluidisierungsmittels orientiert sein und sich erst dann neigen oder krümmen. Eine entsprechend gekrümmte oder geneigte Anstellung der Drallschaufeln in einem Winkel von bis zu 10° ist jedoch ebenfalls vorgesehen und möglich.

An ihrer Oberkante sind die Drallschaufeln auf ihrer Druckseite bezogen auf die axiale Strömungsgeschwindigkeitskomponente in einem Winkel von bis zu 35° geneigt, um eine entsprechend starke Umlenkung sowohl der Strömung des Fluidisierungsmittels als auch der partikelförmigen Materialien zu bewirken.

In der Vorrichtung ist ein Überhitzer innerhalb des Behälters angeordnet, wobei der Innendurchmesser der Drallschaufeln dem Außendurchmesser des Überhitzers entspricht. Die Drallschaufeln schließen somit radial innen mit dem Überhitzer ab. Die radial äußeren Seiten der Drallschaufeln erstrecken sich bis zur Behälterwandung, wobei auf der radial äußeren Seite auch ein Spalt zwischen den seitlichen Rändern der Drallschaufeln und der Behälterwandung bestehen kann.

Die Zusatzdrallschaufeln sind auf ihrer Druckseite bezogen auf die axiale Strömungsgeschwindigkeitskomponente des Fluidisierungsmittels an der Unterkante in einem Winkel von bis zu 15° geneigt, um eine stärkere Umlenkung der Strömung zu bewirken. An ihrer Oberkante beträgt die Neigung bis zu 90°, um die axiale Bewegung nahezu vollständig in Umfangsrichtung abzulenken. Da die Drall- und Zusatzdrallschaufeln bevorzugt aus blechartigem Material ausgebildet sind, entsprechen die Winkel der Druckseite in ihrem Betrag dem Winkel auf der der Druckseite abgewandten Seite.

Oberhalb der Zusatzdrallschaufeln sind Rückführ- oder Rückdrallschaufeln mit einer zu den Drallschaufeln und den Zusatzdrallschaufeln entgegengesetzten Neigung oder Krümmung vorgesehen, deren Druckseite bezogen auf die axiale Strömungsgeschwindigkeitskomponente des Fluidisierungsmittels am Eintrittsende in einem Winkel von bis zu 90° geneigt ist, wobei die Neigung an dem Austrittsende in einem Winkel von bis zu 0° geneigt ist, so dass aus der im Wesentlichen ringförmigen Strömung in Umfangsrichtung wieder eine Strömung parallel zur Axialrichtung realisiert wird. Dadurch wird das Fluidisierungsmittel in Axialrichtung umgelenkt, so dass bevorzugt eine Zurückführung zu dem Überhitzer und dem Lüfter erfolgen.

Die Abfuhr des Fluids erfolgt in einer Ausgestaltung der Erfindung über ein zentral angeordnetes Austrittsrohr, wobei die Rückführschaufeln an ihrem radial inneren Ende an das Austrittsrohr angrenzen. Die Rückfuhrschaufeln können eine doppelt gekrümmte bzw. doppelt geneigte Form aufweisen, gleiches gilt für die Drallschaufeln und die Zusatzdrallschaufeln.

Außerdem können weitere Einrichtungen zur Reinigung, Rückleitung sowie Erhitzung des Fluidisierungsmittels dem Lüfter vorgeschaltet sein, um das Fluidisierungsmittel zu konditionieren.

An dem unteren Ende des Prozessraumes ist ein Anströmboden mit Durchströmöffnungen angeordnet. Dieser Anströmboden kann Einrichtungen zur Beeinflussung des Volumenstromes aufweisen, so dass in Umfangsrichtung, also in Transportrichtung des zu behandelnden Materials, unterschiedliche Volumina des Fluidisierungsmittels bereitgestellt werden. Die unterschiedlichen Volumina des Fluidisierungsmittels können beispielsweise in Abhängigkeit von der Position der Zellen erfolgen. Je schwerer das zu behandelnde Material ist, d. h. je feuchter das Material ist, desto größer ist die Menge des Fluidisierungsmittel anzusetzen.

Die Zelle mit der Eintragseinrichtung und die Austragszelle können nebeneinander angeordnet sein, wobei zur Vermeidung eines unmittelbaren Transportes von der Eintragszelle zur Austragszelle eine Trenneinrichtung vorgesehen ist. Bei einer Nebeneinanderanordnung der Eintragszelle und der Austragszelle muss das Material den gesamten Umfang des im Wesentlichen ringförmigen Prozessraumes durchlaufen.

Eine Weiterbildung sieht vor, dass der Anströmboden so gestaltet ist, dass der Austrag von Partikeln aus dem Prozessraum in den Drallschaufelbereich durch aufplatzende Blasen der fluidisierten Partikel entsprechend den Abscheidebedingungen über den Drallschaufeln vorzugsweise radial außen nahe der Behälterwandung erfolgt. Um die Wirbelbewegung im unteren Bereich des Prozessraumes zu verstärken und am radial äußeren Rand des Prozessraumes, also im Bereich der Außenwandung, ein erhöhte Strömungsgeschwindigkeit bereitzustellen, damit das Material dort nach oben befördert wird, ist vorgesehen, dass am radial äußeren Bereich des Anströmbodens ein größeres Öffnungsverhältnis als am radial inneren Bereich des Anströmbodens ausgebildet ist. Dies heißt, dass mehr oder größere Durchtrittsöffnungen im Bereich der Außenwandung im Anströmboden als im Bereich der Innenwandung des Prozessraumes, also in der Nähe des Überhitzers, angeordnet sind.

Zur Vermeidung von Partikelablagerungen in dem radial inneren Bereich des Prozessraumes ist der Anströmboden gewölbt gestaltet. Die Wölbung kann dabei stetig erfolgen oder über eine Anzahl winkelig zueinander orientierter, im Wesentlichen gerader Bleche ausgebildet sein. Durch die Wölbung des Anströmbodens in Verbindung mit dem variierten Öffnungsverhältnis des Anströmbodens in radialer Richtung wird eine umlaufende Wirbelbewegung der Partikel in radialer Richtung erzeugt. Die Kontur ist dabei in der Ebene der vertikalen Wände zu sehen, so dass der Anströmboden unterhalb der Wände einen Bogen oder einen bogenförmigen Polygonalzug ausbildet. Im Gegensatz dazu besteht bei einem ebenen Anströmboden die Gefahr der Ablagerung von großen, schwer zu fluidisierenden Partikeln.

Der Anströmboden kann Durchtrittsöffnung für das Fluidisierungsmittel aufweisen, die unterschiedlich ausgebildet sein können. Die Durchtrittsöffnungen können beispielsweise als Löcher, Schlitze oder andere freie Durchtrittsflächen ausgebildet sein. Ebenfalls können die Durchströmöffnungen durch Spalten in den Blechen, aus denen der Anströmboden gefertigt ist, ausgebildet sein.

Um den Partikeltransport zu gewährleisten, ist ein möglichst einheitlicher Fluidisierungszustand in den Zellen vorgesehen. Da sich die fluidisierungstechnischen Eigenschaften der Partikel als Folge der Fluidentfernung von Eintrag bis zum Austrag verändern, wird im Bereich der Eintragszelle ein größeres Öffnungsverhältnis als im Bereich der Austragszelle angeordnet. Bevorzugt verringert sich das Öffnungsverhältnis von der Eintragszelle zur Austragszelle schrittweise oder kontinuierlich. Die Öffnungen im Anströmboden können senkrecht oder an einem Winkel dazu angeordnet sein, um das Material innerhalb des Prozessraumes in der Bewegung zu beeinflussen.

Nachfolgend wird ein Ausführungsbeispiel der Erfindung anhand der beigefügten Figuren näher erläutert. Es zeigen:
- Figur 1 -: eine schematische Anordnung einer Trocknungsvorrichtung;
- Figur 2 -: eine Variante des Wirbelschichttrockners in Gesamtansicht,
- Figur 3 -: eine teilgeschnittene Seitenansicht der Vorrichtung;
- Figur 4 -: eine Schnittansicht gemäß Linie A-A der Figur 3;
- Figur 5 -: eine Schnittansicht gemäß Linie D-D der Figur 3;
- Figur 6 -: eine Schnittansicht gemäß Linie C-C der Figur 3; sowie
- Figur 7 -: eine Schnittansicht gemäß Linie B-B der Figur 3.

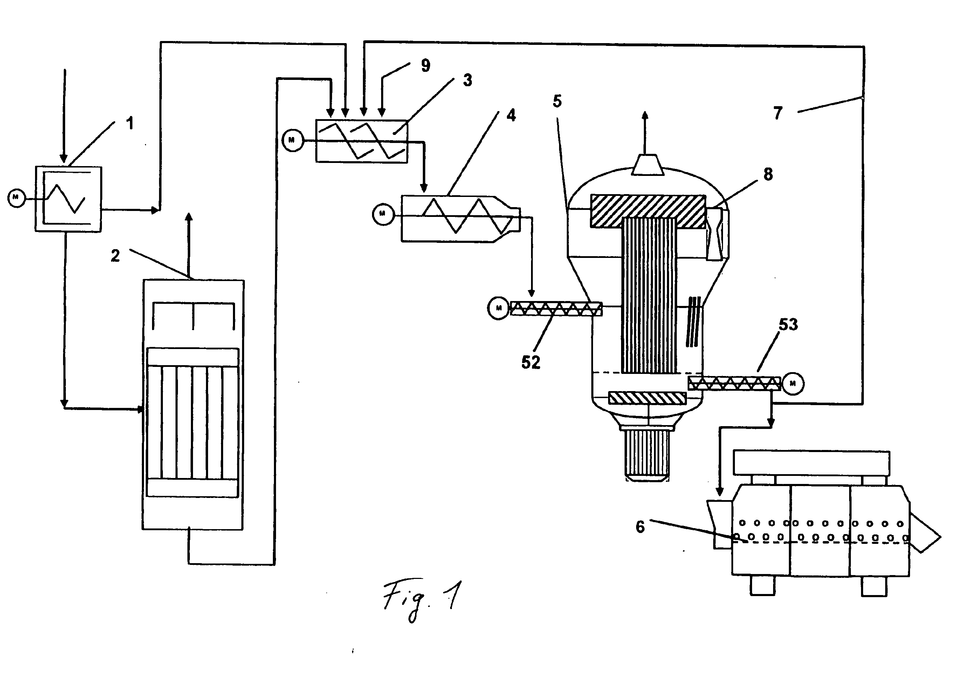

In der Figur 1 ist schematisch eine Vorrichtung zur Trocknung von Nebenprodukten gezeigt, die bei der Verarbeitung von stärke- und zuckerhaltigen Rohstoffen anfallen. Die vorgelagerten Verarbeitungsstufen, beispielsweise im Bereich der Erzeugung von Alkohol, sind nicht dargestellt. Das Nebenprodukt, die sogenannte Schlempe, fällt in mehr oder weniger flüssiger Form an und wird einer Trenn- oder Fraktioniereinrichtung 1 zugeführt, in der eine Trennung des Nebenproduktes in eine Klärephase und eine Dickphase erfolgt. Die Trennung in der Fraktionierungseinrichtung 1 erfolgt über eine oder mehrere mechanische Trennvorrichtungen, in der ein ein- oder mehrfaches Gravitationsfeld aufgebaut wird. Die Fraktionierungseinrichtung 1 kann beispielsweise ein Bogensieb mit einem einfachen Gravitationsfeld oder einen Dekanter oder Separator mit einem mehrfachen Gravitationsfeld aufweisen.

Die in der Trenneinrichtung 1 anfallende Klärephase, die einen hohen Flüssigkeitsanteil aufweist, wird in einen Verdampfer 2 eingeleitet, in dem die Klärephase erwärmt und zu einem Sirup eingedampft wird. Die als Dampf entweichende Flüssigkeit wird nach oben aus dem Verdampfer 2 abgeleitet, der nach dem Eindampfen erhaltene Sirup wird unten ausgeschleust und einer Mischeinrichtung 3 zugeführt. Der Sirup wird in der Mischeinrichtung 3 mit der Dickphase aus der Trenneinrichtung 1 zusammengeführt und dort zu einer im Wesentlichen homogenen Mischphase vermengt. Die Mischeinrichtung 3 kann motorisch angetrieben sein, gegebenenfalls kann ein motorischer Antrieb auch entfallen.

Aus der Mischeinrichtung 3, in der die Dickphase und die eingedampfte Klärephase, also der Sirup, zusammengeführt werden, wird die daraus entstandene Mischphase in eine Konditionierungseinrichtung 4 geleitet. Die Mischeinrichtung 3 kann unmittelbar der Konditionierungseinrichtung 4 vorgeschaltet und auch als rein passives Element, beispielsweise als Einführtrichter ausgestaltet sein.

In der Konditionierungseinrichtung 4 wird die Mischphase formgebend konditioniert, also unter Zufuhr von Druck und gegebenenfalls Temperatur zu Partikeln umgeformt. Die Konditionierungseinrichtung 4 kann dabei als Expander, Extruder oder Pelletierer ausgebildet sein. Ebenfalls können Kombinationen von verschiedenen Konditionierungseinrichtungen 4 hintereinander geschaltet werden, sofern dies notwendig oder erforderlich ist.

Von der Konditionierungseinrichtung 4 werden die daraus erhaltenen Partikel, also die partikeilförmig vorliegende Mischphase, beispielsweise über eine Förderschnecke 52, einem Wirbelschichttrockner 5 zugeführt, in dem die Partikel mit einem Partikellückenvolumen im Bereich von ε zwischen 0,5 und 0,92 getrocknet werden. Die Partikel fallen dabei von oben in einen von unten angeströmten Prozessraum, der unten über einen Anströmboden begrenzt ist. Durch diesen Anströmboden, der Öffnungen zum Durchtritt des Fluidisierungsmittels aufweist, wird das Fluidisierungsmittel, bevorzugt überhitzter Dampf, eingeleitet, so dass die feuchten Partikel getrocknet und gleichzeitig fluidisiert werden. Der Prozessraum innerhalb des Wirbelschichttrockners 5 ist dabei bevorzugt in vertikale Zellen unterteilt, die an ihrem oberen Ende offen sind, so dass Partikel, die nach oben geschleudert werden, in eine nächste Zelle gelangen können. An dem unteren Ende der Zellenwände sind Durchgangsöffnungen vorgesehen, so dass auch ein Stofftransport entlang dem Anströmboden in Umfangsrichtung des im Wesentlichen ringförmigen Prozessraumes erfolgen kann.

Neben der Eintragszelle mit der Eintragseinrichtung 52 ist eine Austragszelle mit einem Bodenteil mit verringerter oder keiner Anströmung von unten vorgesehen. Die Eintragszelle und die Austragszelle liegen nebeneinander und sind strömungstechnisch weitgehend voneinander getrennt, so dass die eingetragenen Partikel den im Wesentlichen ringförmigen Prozessraum durchlaufen müssen, bis sie an die Austragseinrichtung 53 gelangen, von der aus die getrockneten Partikel des Nebenproduktes ausgetragen werden. Dies kann durch eine Austragsschnecke 53 erfolgen, die motorisch angetrieben ist.

Von der Austragseinrichtung 53 werden dann die getrockneten und vorliegend warmen Partikel einer Kühleinrichtung 6 zugeführt, die ebenfalls als Wirbelschichteinrichtung ausgebildet ist. Das Fluidisierungsmittel ist dabei kein überhitzter Heißdampf, sondern bevorzugt Kühlluft. Nach ausreichender Kühlung wird das fertige Produkt aus der Anlage ausgeschleust, beispielsweise verpackt und verkauft. In der Kühleinrichtung 6 ist ein Staubabscheider angeordnet, um eventuell beim Transport zur Kühleinrichtung 6 entstandene Staubpartikel abtrennen zu können.

Ein Teil des getrockneten und bevorzugt noch nicht gekühlten Produktes wird über eine Rückführleitung 7 zu der Mischeinrichtung 3 zurückgeleitet, sofern die Mischphase aus Dickphase und Sirup zu flüssig ist, um in der Konditionierungseinrichtung 4 zu den Partikeln mit einer ausreichenden Stabilität verarbeitet zu werden, die gefordert ist, um in der Wirbelschicht des Wirbelschichttrockners 5 nicht zu zerfallen.

Innerhalb des Wirbelschichttrockners 5 ist ein Staubabscheider 8 angeordnet, der vorhandene Staubpartikel austrägt, so dass nahezu ein staubfreies Endprodukt aus der Austragseinrichtung 53 abtransportiert werden kann. Sollten während des Transportes aus dem Wirbelschichttrockner 5 zu der Kühleinrichtung 6 weitere Staubpartikel entstehen, werden diese aufgrund des Wirbelschichtverfahrens innerhalb der Kühleinrichtung 6 ebenfalls abgetrennt und dadurch ein staubfreies Produkt erhalten.

Grundsätzlich kann das Verfahren, das anhand des Schaubildes erklärt wurde, auch ohne Rückführung der getrockneten Partikel erfolgen. Ebenfalls können in der Mischeinrichtung 3 weitere Zuschlagstoffe der Mischphase zugegeben werden, so dass gezielte Eigenschaftseinstellungen der Mischphase vorgenommen werden können, um eine Konditionierung in der Konditionierungseinrichtung 4 vornehmen zu können. Ebenfalls können die gewünschten Eigenschaften, beispielsweise bei der Herstellung von Viehfutter, durch die Zuschlagstoffe eingestellt werden. Eine Zuleitung der Zuschlagstoffe kann separat über eine Zuführeinrichtung 9 erfolgen, ebenso können die getrockneten Partikel über die Zuführeinrichtung 9 zugegeben werden. Das oben beschriebene Verfahren kann mit der reinen Dickphase und der modifizierten Dickphase, also der Mischphase durchgeführt werden.

Abgase oder Brüden aus dem Wirbelschichttrockner 5 werden nach oben abgeführt.

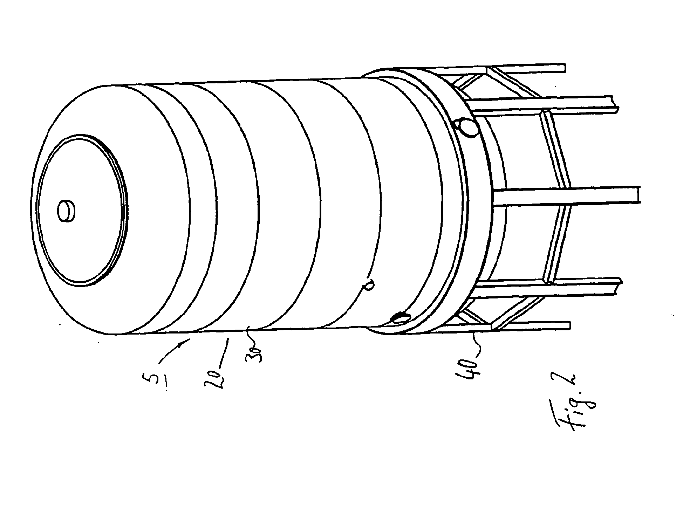

Eine Variante der Erfindung ist in der Figur 2 gezeigt, in der der Wirbelschichttrockner 5 einen im Wesentlichen zylindrischen Aufbau hat. Die übrigen Einrichtungen der Vorrichtung sind im Wesentlichen identisch, so dass auf eine weitere Darstellung hier verzichtet wird.

Figur 2 zeigt in perspektivischer Ansicht eine Vorrichtung 5 mit einem Behälter 20, der eine im Wesentlichen zylindrische Außenhaut 30 aufweist. Der Behälter 20 ist auf einem Gestell 40 gelagert, um die Vorrichtung 5 auch von unten einer Wartung zugänglich zu machen.

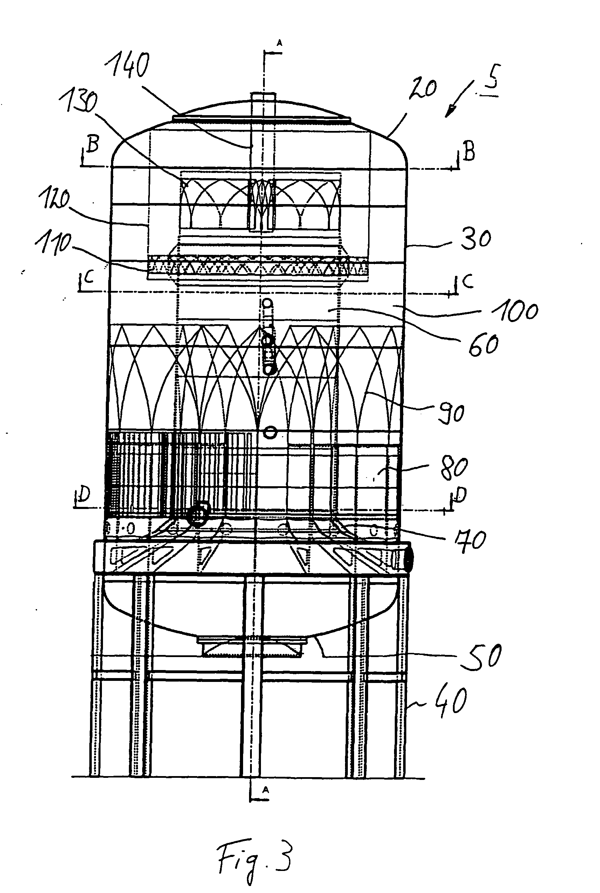

In der Figur 3 ist die Vorrichtung 5 mit dem Behälter 20 in einer teilgeschnittenen Seitenansicht gezeigt, bei der die Außenhaut 30 teilweise entfernt wurde. Es ist zu erkennen, dass die äußere Kontur des Behälters 20 im Wesentlichen zylindrisch ist. Der geometrische Aufbau des Behälters 20 sowie der darin angeordneten Komponenten wird nachfolgend beschrieben.

Der auf einem Gestell 40 aufgestellte Behälter 20 weist an seinem unteren Ende einen gewölbten Boden 50 auf, in dem ein nicht dargestelltes Ventilatorrad angeordnet ist, mit dem ein Fluidisierungsmittel, insbesondere überhitzter Dampf, in dem Behälter 2 zirkuliert wird. Innerhalb des Behälters 20 ist ein im Wesentlichen zylindrischer Überhitzer 60 angeordnet, so dass das Fluidisierungsmittel von unten in einen im Wesentlichen ringförmigen Prozessraum 200 eingeleitet wird, der zwischen dem Überhitzer 60 und der Außenhaut 30 ausgebildet ist. Der Prozessraum 200 ist dabei an seinem unteren Ende von einem Anströmboden 70 begrenzt, der den Durchtritt des Fluidisierungsmittels von unten erlaubt, ein Hindurchfallen des zu behandelnden Materials jedoch nicht zulässt.

Oberhalb des Anströmbodens 70 sind vertikal ausgerichtete Wände 80 angeordnet, die sich von der Außenwandung des Überhitzers 60 bis an die Behälterwandung 30 erstrecken und Zellen zwischen sich ausbilden. Die Wände 80 können bis zum Anströmboden 70 hinunter reichen oder einen Freiraum dazwischen ausbilden. Die durch die Wände 80 gebildeten Zellen sind oben offen, so dass das Fluidisierungsmittel von unten nach oben durch die Zellen hindurchströmt und das zu behandelnde Material oder Partikel mitreißt und ggf. in eine nachgeordnete Zelle transportiert. Die mit einer nicht dargestellten Austragseinrichtung versehene Zelle wird nicht oder nur in einem geringen Maße von dem Fluidisierungsmittel durchströmt, so dass von oben in diese Zelle hineinfallendes Material in den Bodenbereich gelangt und über die Austragseinrichtung 53, beispielsweise eine Förderschnecke, aus einer Austragszelle 170 entfernt werden kann.

Oberhalb der Wände 80 schließen sich Drallschaufeln 90 an, die auch zwischen den Wänden 80 angeordnet sein können und in ihrer Vertikalerstreckung ungefähr der Vertikalerstreckung der Wände 80 entsprechen oder darüber hinausgehen, also länger als die Wände 80 sein können. Die Drallschaufeln 90 sind an ihrer Unterseite, die den Wänden 80 zugewandt ist, im Wesentlichen parallel zu den Wänden 80 ausgerichtet, so dass die Druckseite der Drallschaufeln 90 in einem Winkel von 0° zur Axialkomponente der Strömungsgeschwindigkeit des Fluidisierungsmittels orientiert ist. Die Drallschaufeln 90 sind dem dargestellten Ausführungsbeispiel gekrümmt ausgebildet und sind so orientiert, dass die Krümmung von einer Eintragszelle 150 zur Austragszelle 170 zeigt. Sind beispielsweise die Eintragszelle 150 und die Austragszelle 170 nebeneinander angeordnet, so weist die Krümmung von der Austragszelle 170 weg, so dass der Partikel- und Materialstrom über den gesamten Umfang des Behälters 20 und damit des Prozessraumes 200 transportiert werden muss, um bis zur Austragszelle 170 zu gelangen.

An ihrem oberen Ende weisen die Drallschaufeln 90 eine Krümmung von bis zu 35° zur Axialkomponente der Strömungsgeschwindigkeit des Fluidisierungsmittels auf, um den Strom des Fluidisierungsmittels ebenso wie den des Materials in Umfangsrichtung umzuleiten. Die Drallschaufeln 90 stellen eine Verlängerung der Wände 80 dar, wobei diese Verlängerung mit oder ohne Spalt zwischen den Drallschaufeln 90 und den Wänden 80 ausgebildet sein kann. Die Drallschaufeln 90 können eine einfach oder doppelt gekrümmte Fläche ausbilden, also eine Krümmung sowohl um eine Axialkomponente als auch um eine Radialkompenente aufweisen, um die Strömung des Fluidisierungsmittels und die Bewegungsrichtung des Materials entsprechend den Anforderungen umzuleiten. Statt einer Krümmung kann auch eine Neigung ansonsten geradwandiger Drallschaufeln 90 zur Umleitung der Strömungsrichtung vorsehen sein.

Oberhalb der Drallschaufeln 90 ist ein als Freiraum ausgestalteter Übergangsbereich 100 ausgebildet, der ohne strömungsbeeinflussende Einbauten versehen ist, so dass die Strömung des Fluidisierungsmittels ebenso wie der Transport des Materials und der im Fluidisierungsmittelstrom mitgerissenen Partikel im Wesentlichen ungehindert erfolgen kann. Dieser Freiraum 100, der sogenannte Übergangsbereich, ist ringförmig ausgebildet und erlaubt einen freien, kreisförmigen Durchgang sowohl des Materials als auch des Fluidisierungsmittels in der horizontalen Ebene.

Oberhalb der Drallschaufeln 90 und des Übergangsbereiches 100 sind Zusatzdrallschaufeln 110 angeordnet, die ebenfalls eine einfach oder doppelt gekrümmte Fläche jedoch mit einem Eintrittswinkel von bis zu 15° bezogen auf die axiale Strömungsgeschwindigkeitskomponente auf ihrer Druckseite aufweisen. Der Austrittswinkel beträgt in gleicher Nomenklatur bis zu 90°, wobei der Innendurchmesser der Beschaufelung dem Außendurchmesser des Überhitzers 60 entspricht.

Oberhalb der Zusatzdrallbeschaufelung ist ein Staubabscheider 120 ausgebildet, dessen Außendurchmesser kleiner als der Außendurchmesser des Prozessraumes 200 und damit kleiner als der Außendurchmesser des Behältergehäuses 30 im Bereich der Wände 80 und der Drallschaufeln 90 ist. Der Außendurchmesser der Zusatzdrallbeschaufelung entspricht dem Außendurchmesser des Staubabscheiders 120. Durch die Anpassung der Zusatzdrallbeschaufelung an die Drallschaufeln 90 ergibt sich eine hinsichtlich des Druckverlustes optimierte Konstruktion der Vorrichtung 5, so dass die Gesamtvorrichtung mit einem hohen Wirkungsgrad betrieben werden kann. Die Außenkontur 30 des Behälters 20 ist dabei zumindest bis auf die Höhe der Drallschaufeln 90, vorliegend bis auf die Höhe des Staubabscheiders 120 bzw. der Zusatzdrallschaufeln 110 zylindrisch, wodurch eine materialintensive Konstruktion des vorzugsweise als Druckbehälter gestalteten Behälters 20 vermieden wird. Die Vordrallbeschaufelung erzeugt und unterstützt über der in dem Prozessraum 200 vorhandenen Wirbelschicht einen Vordrall oder die Drallströmung, wodurch der erforderliche und gewünschte Weitertransport von der Eintragszelle 150 zu der Austragszelle 170 unterstützt wird. Innerhalb des Staubabscheiders 120 wird ein Zentrifugalfeld erzeugt, in dem die Staubpartikel und mitgerissene partikelförmige Materialien außen umlaufend bewegt werden und durch eine Öffnung ausgetragen werden.

Oberhalb der Zusatzdrallschaufeln 110 sind entgegen der Drallrichtung orientierte Rückführschaufeln 130 angeordnet, die den Drall sowohl des Fluidisierungsmittels als auch der im Fluidisierungsmittel mitgerissenen Staubpartikel umlenken und in einen statischen Druck umwandeln, um das Fluidisierungsmittel dem Überhitzer 60 zuzuführen. Die Rückführ- oder Rückdrallschaufeln 130 weisen ebenfalls eine einfache oder doppelt gekrümmte oder geneigte Fläche mit einem Eintrittswinkel von bis zu 90° bezogen auf die axiale Strömungsgeschwindigkeitskomponente des Fluidisierungsmittels auf, wobei der Austrittswinkel bei gleicher Nomenklatur bis zu 10° beträgt. Der Innendurchmesser der Beschaufelung entspricht dem Außendurchmesser eines Austrittsrohrs 140, während der Außendurchmesser der Beschaufelung dem Innendurchmesser des Überhitzers 60 entspricht.

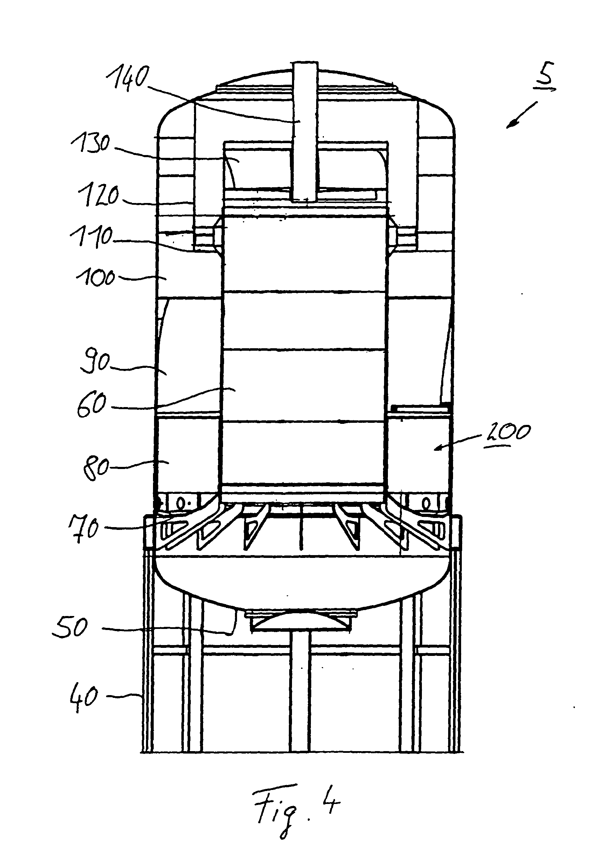

In der Figur 4 ist in Schnittdarstellung, die die Vorrichtung 5 dargestellt, aus der der Aufbau des Anströmbodens 70 und der sich oberhalb anschließenden Wände 80 erkennen lassen. Zwischen den Wänden 80 und den gekrümmten oder geneigten Drallschaufeln 90 ist ein Freiraum ausgebildet, grundsätzlich können sich die Drallschaufeln 90 auch unmittelbar an die Wände 80 anschließen.

Der ringförmige Übergangsbereich 100 oberhalb der der Drallschaufeln 90 ist ebenso zu erkennen wie der zentral angeordnete Überhitzer 60, der sich nahezu über die gesamte Länge des Behälters 20 erstreckt, so dass sich oberhalb des Anströmbodens 70 bis zu der Unterkante der Drallschaufeln 90 der ringförmige Prozessraum 200 ausbildet. Der Staubabscheider 120 mit den an dem unteren Ende angeordneten Zusatzdrallschaufeln 110 und den Rückführschaufeln 130 zur Umlenkung der umlaufenden Strömung in eine axial gerichtete Strömung ist ebenso zu erkennen wie die Außenabmessung der Rückführschaufeln 130, die dem Außendurchmesser des Überhitzers 60 entspricht, und die Anordnung der Rückführschaufeln 130 um das Austrittsrohr 140, das zentral in dem Behälter 20 angeordnet ist.

Die Drallbeschaufelung ersetzt den bisher üblichen, sich nach oben erweiternden Konus und erreicht eine Umlenkung der Strömung, damit größere Partikel des Materials radial nach außen abgelenkt und an der Behälterwand abgebremst werden und unter Schwerkrafteinfluss wieder herunterfallen können, um einer weiteren Behandlung durch das Fluidisierungsmittel ausgesetzt werden zu können. Der Transport der partikelförmigen Materialien von der Eintragszelle 150 bis zu der Austragszelle 170 erfolgt entlang des Anströmbodens 70 in Umfangsrichtung durch die in den Wänden 80 vorgesehenen, unten angeordneten Ausschnitte. Weiterhin erfolgt der Transport des zu trocknenden Materials oberhalb der Drallschaufeln 90 mit Hilfe der durch die Drallschaufeln 90 erzeugten Drallströmung, so dass auf weitere Einbauten verzichtet werden kann.

Die Zusatzdrallschaufeln 110 stellen eine hinsichtlich des Druckverlustes optimierte Beschaufelung dar, die das Fluidisierungsmittel in eine verstärkte Drallströmung umlenkt, um über einen Seitenzyklon das eventuell noch vorhandene Material bzw. Staubpartikel abscheiden zu können. Die Rückführschaufeln 130 sind im Wesentlichen axialer Bauart und erstrecken sich radial, von dem Austrittsrohr 140 ausgehend, nach außen. Dadurch wird der Drall abgebaut und in statischen Druck umgewandelt, was zu einer erleichterten Rückführung des Fluidisierungsmittels durch den Überhitzer 60 führt. Die Behälteraußenwandung 30 kann auch an die Kontur des Staubabscheiders 120 angepasst werden, wodurch sich der benötigte Bauraum oberhalb der Zusatzdrallschaufeln 110 weiter verringert.

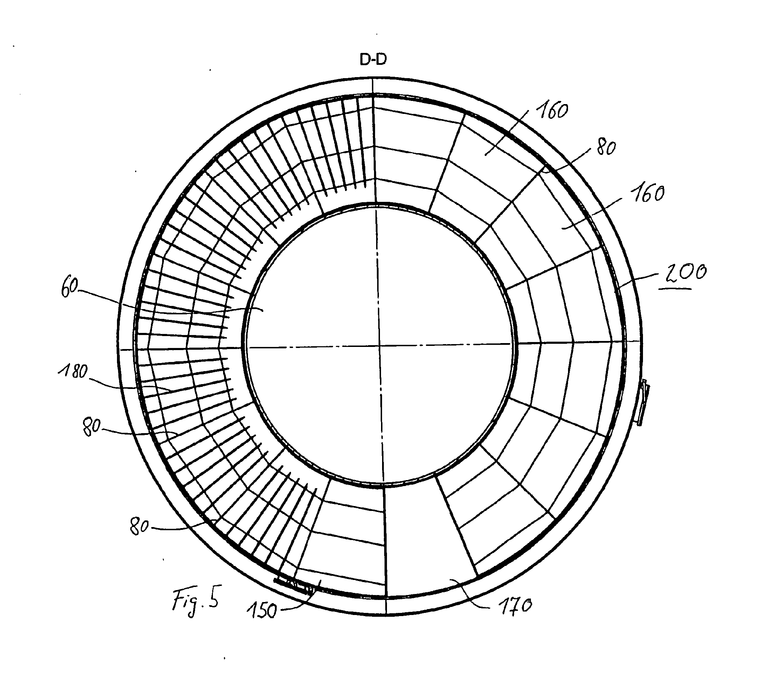

Die Figur 5 stellten einen Horizontalschnitt entlang der Linie D-D der Figur 3 dar. An dem unteren Ende ist die Eintragszelle 150 mit einer nicht dargestellten Eintragseinrichtung, beispielsweise einer Schneckenfördereinrichtung, gezeigt, die unmittelbar neben der Austragszelle 170 angeordnet ist, wobei die Eintragszelle 150 und die Austragszelle 170 strömungstechnisch so voneinander getrennt sind, dass ein unmittelbarer Übergang des Materials von der Eintragszelle 150 in die Austragszelle 170 verhindert wird. Ausgehend von der Eintragszelle 150 schließen sich eine Vielzahl von Verarbeitungszellen 160 an, die durch Trennwände 80 voneinander getrennt sind. Die Trennwände 80 können dabei bis unmittelbar an die Behälterwandung 30 angrenzen oder in einem bestimmten Abstand davon innerhalb des ringförmigen Prozessraumes 200, der an der Unterseite von dem Anströmboden 70 und an der Oberseite von der Unterseite der Drallschaufeln 90 begrenzt wird, aufgehängt sein. Innerhalb der Verarbeitungszellen 160 können Zwischenheizwände 180 angeordnet sein, um das zu verarbeitende Produkt zu erwärmen.

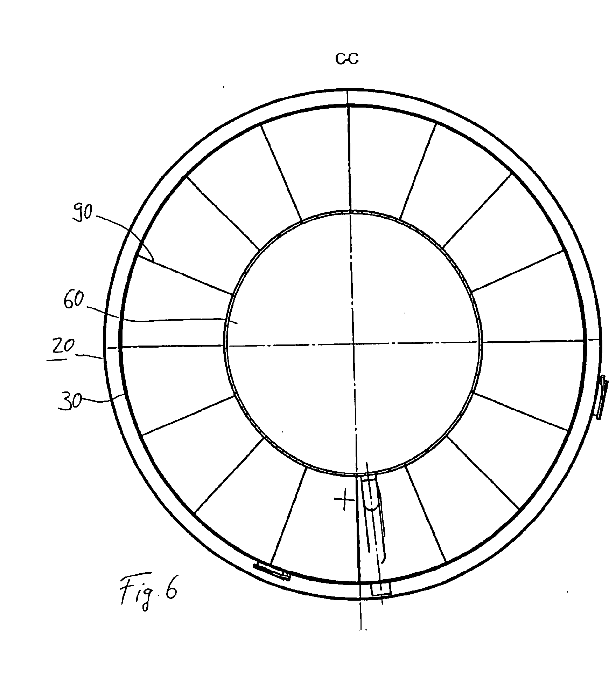

In der Figur 6 ist Horizontalschnitt entlang der Linie C-C der Figur 3 dargestellt, der die zentrale Anordnung des Überhitzers 60 und die ringförmig darum angeordneten Drallschaufeln 90 zu entnehmen sind. Die Drallschaufeln 90 bilden die Verlängerung der vertikalen, sich radial erstreckenden Wände 80 und erstreckten sich von dem Überhitzer 60 bis zur Außenwandung 30 des Behälters 20. Die Drallschaufeln 90 sind ebenso wie die Wände 80 im Wesentlichen radial ausgerichtet und können eine einfache oder doppelte Neigung bzw. Krümmung aufweisen, um die vorwiegend axiale Strömung bzw. Bewegung des zu trocknenden Materials aufgrund der von unten nach oben geführten Strömung des Fluidisierungsmittels umzulenken und mit einem Drall zu versehen.

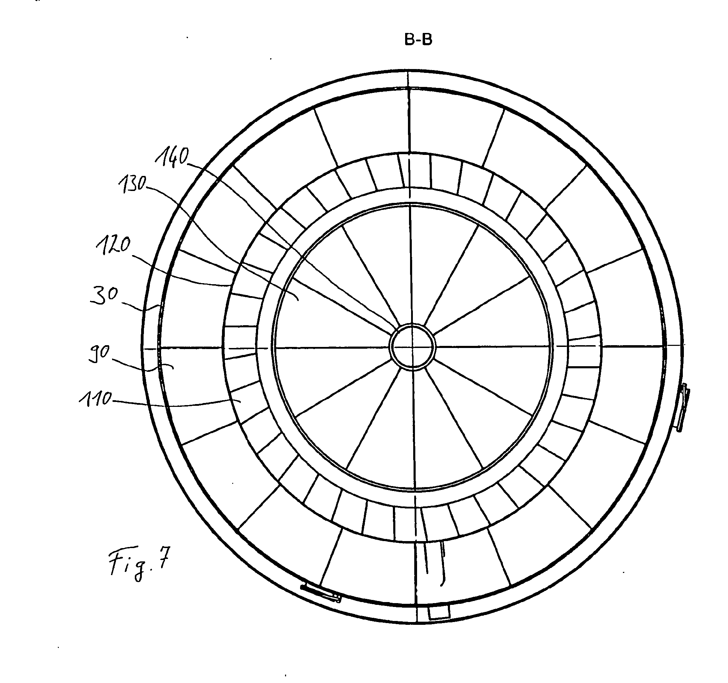

Figur 7 zeigt einen Schnitt in Horizontalebene entlang der Linie B-B der Figur 3, aus der die Drallschaufeln 90, die Zusatzdrallschaufeln 110 sowie das im Wesentlichen zylindrische Gehäuse des Staubabscheiders 120 zu erkennen sind. Auch die Zusatzdrallschaufeln 110 erstrecken sich im Wesentlichen radial nach außen und liegen mit ihrer Innenseite an dem Gehäuse des Überhitzers 60 an, radial außen ragen sie bis an die Außenwandung des Staubabscheiders 120 und bewirken aufgrund ihrer Neigung bzw. Krümmung eine gegenüber den Drallschaufeln 90 verstärkte Umlenkung und damit eine Erhöhung des Dralls. Staubpartikel können aus dem Staubabscheider 120 beispielsweise über einen außerhalb der Vorrichtung 5 angeordneten Seitenzyklon abgeführt werden, ebenfalls ist es möglich, diese Staubpartikel in die Austragszelle 170 zu leiten.

Oberhalb der Zusatzdrallschaufeln 110 sind die Rückführ- oder Rückdrallschaufeln 130 vorgesehen, die im Wesentlichen axial wirksam sind und die in Umfangsrichtung orientierte Strömung des Fluidisierungsmittels in einen statischen Druck umwandeln und das Fluidisierungsmittel dem Überhitzer 60 zur Aufbereitung bzw. Erwärmung zuführen. Zentral angeordnet ist das Austrittsrohr 140, durch das Fluidisierungsmittel abgeleitet werden kann. Die Rückführschaufeln 130 erstrecken sich von dem Austrittsrohr 140 radial nach außen bis zum Umfang des Überhitzers 60. Weitere Aufbereitungseinrichtungen für das Fluidisierungsmittel können vorgesehen sein, um dieses zu konditionieren. Insbesondere sind Reinigungseinrichtungen vorzusehen, damit der Lüfter oder das Ventilatorrad nicht durch die auftreffenden Staubpartikel oder dergleichen beschädigt wird.

Statt der im Stand der Technik bekannten Lösung der konischen Aufweitung eines Behälters oberhalb der Prozesskammer bzw. der Zellen ist es mit der erfindungsgemäßen Lösung möglich, einen zylindrischen Aufbau des Behälters 20 zu realisieren. Dadurch ergeben sich signifikante Materialeinsparungen, insbesondere für einen als Druckbehälter auszuführende Behälter 20, ohne dass die Trocknungsleistung bei Einsatz der Vorrichtung als ein Verdampfungstrockner leidet. Die Auslegung des Lüfters erfolgt dabei so, dass eine Fluidisierung des zu behandelnden, insbesondere zu trocknenden Materials erfolgt, so dass die zu trocknenden Materialien bzw. Partikel von der Eintragszelle 150 bis zur Austragszelle 170 transportiert werden.

Statt der in den Figuren dargestellten sechzehn Zellen oder Kammern, mit der ersten Eintragszelle 150, vierzehn Verarbeitungszellen 160 und der letzten Austragszelle 170, können auch abweichende Zellenanzahlen realisiert werden. Eine umlaufende Strömungsführung hat den Vorteil, dass die Partikel in dem Fluidisierungsmittel über die Zusatzdrallschaufeln 110 und den Staubabscheider 120 optimal abgeschieden werden können. Die einsinnige Umlaufrichtung des Fluidisierungsmittels erleichtert ebenfalls die Rückführung und die Umwandlung des Drallimpulses in einen statischen Druck aufgrund der Krümmung bzw. Neigung der Rückführschaufeln 130, die eine entgegengesetzte Orientierung im Verhältnis zu der Krümmung oder Neigung der Drall- und Zusatzdrallschaufeln 90, 110 aufweisen.

## Patentansprüche

1. Verfahren zur Trocknung von Nebenprodukten bei der Verarbeitung von stärke- und zuckerhaltigen Rohstoffen, insbesondere nach deren Fermentation und Destillation, bei dem das Nebenprodukt in eine Klärephase mit hohem Flüssigkeitsanteil und eine Dickphase fraktioniert wird, **gekennzeichnet durch** folgende Schritte:
■ die Klärephase wird zu einem Sirup eingedampft und der Sirup wird der Dickphase zur Bildung einer Mischphase vor oder während eines Konditionierverfahrens zugeführt, und/oder
Zuschlagstoffe werden der Dickphase vor oder während des Konditionierverfahrens zugegeben, wobei
der Sirup und/oder die Zuschlagstoffe der Dickphase in einem Mischer oder separat in einer Vorrichtung zur Durchführung des Konditionierungsverfahrens zugegeben wird bzw. werden,
■ in dem Konditionierungsverfahren werden Partikel uniformer Geometrie geformt,
■ diese Partikel werden in einer pneumatischen Wirbelschichttrocknungsanlage mit einem relativen Lückenvolumen in der Wirbelschicht im Bereich zwischen 0,5 und 0,92 getrocknet.

2. Verfahren nach Anspruch 1, **dadurch gekennzeichnet, dass** die Fraktionierung des Nebenproduktes in eine Klärephase und eine Dickphase in einem ein- oder mehrfachen Gravitationsfeld durchgeführt wird.

3. Verfahren nach einem der voranstehenden Ansprüche, **dadurch gekennzeichnet, dass** die getrockneten Partikel in einer Wirbelschichtapparatur gekühlt werden.

4. Verfahren nach einem der voranstehenden Ansprüche, **dadurch gekennzeichnet, dass** die Dickphase auf einen Trockensubstanzgehalt zwischen 30% und 60%, insbesondere 40% eingestellt wird.

5. Verfahren nach einem der voranstehenden Ansprüche, **dadurch gekennzeichnet, dass** die Konditionierung der Dickphase in einem Expander, Extruder und/oder Pelletierer durchgeführt wird.

6. Verfahren nach einem der voranstehenden Ansprüche, **dadurch gekennzeichnet, dass** die Konditionierung der Dickphase zu fluidisierungsfähigen, insbesondere formstabilen, Einzelpartikeln erfolgt, vorzugsweise in Form von Zylindern, deren Länge im Wesentlichen deren Durchmesser entspricht, wobei die Länge insbesondere in einem Bereich von 5 bis 10 mm liegt.

7. Verfahren nach einem der vorangehenden Ansprüche, **dadurch gekennzeichnet, dass** Zuschlagstoffe mit einem Feuchtegehalt zugegeben werden, der geringer als der Feuchtegehalt der Dickphase ist.

8. Verfahren nach einem der vorangehenden Ansprüche, **dadurch gekennzeichnet, dass** ein Teil der getrockneten Partikel als Zuschlagstoff der Dickphase vor oder während dem Konditionieren rückgeführt wird.

9. Verfahren nach einem der voranstehenden Ansprüche, **dadurch gekennzeichnet, dass** eine mechanische Trenneinrichtung (1) das Nebenprodukt in eine Klärephase mit hohem Flüssigkeitsanteil und eine Dickphase trennt,
eine Zuführeinrichtung eine in einer Eindampfeinrichtung (2) zur Entfernung von Flüssigkeit aus der Klärphase eingedampften Klärephase zu der Dickphase und/oder Zuschlagstoffe zu der Dickphase zuführtund
eine Mischeinrichtung (3) für die Dickphase und die eingedampfte Klärephase und/oder die Zuschlagstoffe vorgesehen wird, wobei
die Mischeinrichtung (3) einer formgebenden Konditioniereinrichtung (4) vorgeschaltet oder mit derselben in einem ausgebildet wird,
die Konditioniereinrichtung (4) der Trenneinrichtung (1) nachgeschaltet wird sowie die Dickphase und die eingedampfte Klärphase und/oder die Zuschlagstoffe zu Partikeln uniformer Geometrie formt, und
der Konditioniereinrichtung (4) eine Wirbelschichttrocknungsanlage (5) nachgeordnet wird, in der die Partikel durch pneumatische Fluidisierung mit einem Lückenvolumen von 0,5 bis 0,92 getrocknet werden.

10. Verfahren nach Anspruch 9, **dadurch gekennzeichnet, dass** der Wirbelschichttrocknungsanlage (5) eine Kühleinrichtung (6) nachgeordnet wird.

## Claims

1. A method for drying by-products when processing raw materials that contain starch and sugar, especially after the fermentation and distillation of said raw materials, wherein the by-product is fractionated into a clear phase with a high liquid content and a thick phase, **characterised by** the following steps:
• the clear phase is evaporated into a syrup and the syrup is added to the thick phase for the formation of a mixed phase before or during a conditioning process, and/or additives are added to the thick phase before or during the conditioning process, wherein
the syrup and/or the additives is/are added to the thick phase either in a mixer or separately in a device for performing the conditioning process, and/or
• particles with a uniform geometry are formed during the conditioning process,
• these particles are dried in a pneumatic fluidised bed drying system with a relative void volume in the fluidised bed within the range between 0.5 and 0.92.

2. A method according to claim 1, **characterised in that** the by-product is fractionated into a clear phase and a thick phase in a single or multiple gravity field.

3. A method according to any one of the preceding claims, **characterised in that** the dried particles are cooled in a fluidised bed apparatus.

4. A method according to any one of the preceding claims, **characterised in that** the thick phase is set to a dry mass content between 30% and 60%, particularly to 40%.

5. A method according to any one of the preceding claims, **characterised in that** the thick phase is conditioned in an expander, extruder and/or pelletiser.

6. A method according to any one of the preceding claims, **characterised in that** the thick phase is conditioned into individual particles that can be fluidised, in particular individual particles with a stable shape, preferably in the form of cylinders whose length substantially corresponds to their diameter, wherein the length is in particular within a range of 5 to 10 mm.

7. A method according to any one of the preceding claims, **characterised in that** additives are added with a moisture content which is below the moisture content of the thick phase.

8. A method according to any one of the preceding claims, **characterised in that** a part of the dried particles is returned to the thick phase as an additive before or during conditioning.

9. A method according to any one of the preceding claims, **characterised in that** a mechanical separating device (1) separates the by-product into a clear phase with a high liquid content and a thick phase,
a feeding device supplies a clear phase that has been evaporated in an evaporating device (2) for removing liquid from the clear phase to the thick phase and/or supplies additives to the thick phase, and
a mixing device (3) for the thick phase and the evaporated clear phase and/or the additives is provided, wherein
the mixing device (3) is connected upstream of a shaping conditioning device (4) or formed integrally with said conditioning device,
the conditioning device (4) is connected downstream of the separating device (1) and transforms the thick phase and the evaporated clear phase and/or the additives into particles with a uniform geometry, and
a fluidised bed drying system (5) is connected downstream of the conditioning device (4), in which the particles are dried by means of pneumatic fluidisation with a void volume of 0.5 to 0.92.

10. A method according to claim 9, **characterised in that** a cooling device (6) is connected downstream of the fluidised bed drying system (5).

## Revendications

1. Procédé de séchage de sous-produits lors du traitement de matières premières contenant de l'amidon et de matières premières contenant du sucre, en particulier après fermentation et distillation de ceux-ci, dans lequel le sous-produit est fractionné en une phase claircée avec une part de liquide élevée et une phase épaisse, **caractérisé par** les étapes ci-dessous :
• la phase claircée est concentrée pour donner un sirop et le sirop est amené à la phase épaisse avant ou pendant un procédé de conditionnement pour former une phase mixte, et/ou
des produits d'addition sont ajoutés à la phase épaisse avant ou pendant le procédé de conditionnement,
le sirop et/ou les produits d'addition étant ajouté à la phase épaisse dans un mélangeur ou de manière séparée dans un dispositif de mise en oeuvre du procédé de conditionnement,
• des particules de géométrie uniforme sont formées dans le procédé de conditionnement,
• ces particules sont séchées dans une installation de séchage pneumatique à lit fluidisé avec un volume d'écartement relatif dans le lit fluidisé situé dans une plage comprise entre 0,5 et 0,92.

2. Procédé selon la revendication 1, **caractérisé en ce que** le fractionnement du sous-produit en une phase claircée et une phase épaisse est mis en oeuvre dans un champ gravitationnel unique ou multiple.

3. Procédé selon l'une quelconque des revendications précédentes, **caractérisé en ce que** les particules séchées sont refroidies dans un appareil à lit fluidisé.

4. Procédé selon l'une quelconque des revendications précédentes, **caractérisé en ce que** la phase épaisse est ajustée à une teneur en matière sèche comprise entre 30 % et 60 %, en particulier 40 %.

5. Procédé selon l'une quelconque des revendications précédentes, **caractérisé en ce que** le conditionnement de la phase épaisse est mis en oeuvre dans un expanseur, une extrudeuse et/ou un appareil de pelletisation.

6. Procédé selon l'une quelconque des revendications précédentes, **caractérisé en ce que** le conditionnement de la phase épaisse donne des particules individuelles susceptibles d'être fluidisées, en particulier de forme stable, de préférence sous la forme de cylindres, dont la longueur correspond essentiellement à leur diamètre, la longueur se situant en particulier dans une plage de 5 à 10 mm.

7. Procédé selon l'une quelconque des revendications précédentes, **caractérisé en ce que** des produits d'addition sont ajoutés, qui ont une teneur en humidité inférieure à la teneur en humidité de la phase épaisse.

8. Procédé selon l'une quelconque des revendications précédentes, **caractérisé en ce qu'**une partie des particules séchées est redirigée en tant que produit d'addition vers la phase épaisse avant ou pendant le conditionnement.

9. Procédé selon l'une quelconque des revendications précédentes, **caractérisé en ce qu'**un dispositif de séparation mécanique (1) sépare le sous-produit en une phase claircée, présentant une part élevée de liquide, et une phase épaisse,
un dispositif d'acheminement achemine une phase claircée, concentrée dans un dispositif de concentration (2) pour éliminer le liquide de la phase claircée, vers la phase épaisse et/ou des produits d'addition vers la phase épaisse et
un dispositif de mélange (3) est prévu pour la phase épaisse et la phase claircée concentrée et/ou les produits d'addition,
le dispositif de mélange (3) est placé avant un dispositif de conditionnement (4) opérant une mise en forme ou est réalisé d'un seul tenant avec celui-ci,
le dispositif de conditionnement (4) est placé après le dispositif de séparation (1) et façonne la phase épaisse et la phase claircée concentrée et/ou les produits d'addition pour donner des particules de géométrie uniforme, et
une installation de séchage (5) à lit fluidisé dans laquelle les particules sont séchées grâce à une fluidisation pneumatique avec un volume d'écartement de 0,5 à 0,92, fait suite au dispositif de conditionnement (4).

10. Procédé selon la revendication 9, **caractérisé en ce qu'**un dispositif de refroidissement (6) fait suite à l'installation de séchage (5) à lit fluidisé.
